# EUROPEAN PATENT SPECIFICATION

(11) **EP 3 620 680 B1**
(45) Date of publication and mention of the grant of the patent: **27.08.2025**
(21) Application number: 19184164.2
(22) Date of filing: 03.07.2019
(51) Int. Cl.: F16F 1/38

(54) **ASSEMBLY METHOD OF SPLIT MOTOR RUBBER JOINT AND MOTOR RUBBER JOINT**
MONTAGEVERFAHREN EINER GETEILTEN MOTORGUMMIDICHTUNG UND MOTORGUMMIDICHTUNG
PROCÉDÉ D'ASSEMBLAGE D'UN JOINT EN CAOUTCHOUC FENDU DE MOTEUR ET JOINT EN CAOUTCHOUC DE MOTEUR

(30) Priority: 06.09.2018 CN 201811037530
(43) Date of publication of application: 11.03.2020
(73) Proprietor: Zhuzhou Times New Material Technology Co., Ltd., Zhuzhou, Hunan 412007 (CN)
(72) Inventor: ZHANG, Yuxiang, Zhuzhou, Hunan, 412007 (CN); CHEN, Junhui, Zhuzhou, Hunan, 412007 (CN); HUANG, Jiangbiao, Zhuzhou, Hunan, 412007 (CN); LUO, Jun, Zhuzhou, Hunan, 412007 (CN); FENG, Wansheng, Zhuzhou, Hunan, 412007 (CN); ZHANG, Zhiqiang, Zhuzhou, Hunan, 412007 (CN); ZENG, Hui, Zhuzhou, Hunan, 412007 (CN)
(74) Representative: Keil & Schaafhausen Patentanwälte PartGmbB

(56) References cited:
- EP-A1- 0 072 666
- WO-A1-2017/031266
- CN-A- 108 980 245
- CN-U- 207 111 803
- CN-U- 207 345 831
- US-A- 5 189 962
- US-A1- 2007 085 253

## Description

### Technical Field

The present invention relates to an assembly method of a rubber joint and a rubber joint product, particularly relates to an assembly method of a split motor rubber joint and a motor rubber joint and belongs to the technical field of rail vehicles.

### Background

A rubber joint is a frequently-used rubber to metal part of elastic components for shock vibration and damping purpose, and can be widely applied to various vibration isolation and damping conditions. A motor rubber joint is used for a motor suspension system. As an important component to fix a motor on a bogie, the motor rubber joint is required to achieve flexible connection and vibration and noise reducing purpose while minimizing the weight itself.

China high-speed railway has grown from scratch, from catching up to surpassing, from introducing digestion and absorption to innovation, to system integration innovation and to complete independent innovation, and has become the epitome of the world's railway technology. China initially introduced four different technical platforms: type 1 vehicle, type 2 vehicle, type 3 vehicle and type 5 vehicle, from Europe and Japan, forming the first generation of high-speed railway members represented by CRH2, CRH3 and CRH5. The second generation of high-speed railway products represented by CRH380 series and built based on the above technical platforms, is basically self-designed. China electric multiple units (CR series) have built a completely autonomous electric multiple units product platform, formed a series of own standards and owned its intellectual property system. The CR series has three speed levels of CR400/300/200 and a sustained speed of 350, 250 and 160 km per hour. Each series of electric multiple units has different performance requirements for the components of each composition due to different speed levels and different operating environments.

In order to meet the needs of independent innovation, it is necessary to design components suitable for electric multiple units of different speed levels to achieve complete localization.

The applicant has previously proposed a series of patent applications, such as applications of patents for invention of application number CN201711076516.4 and title "adjustment method and structure of rigidity and variable rigidity of air-solid phase axle box positioning nodes", application number CN201711076520.0 and title"rigidity adjustment method of axle box positioning node and axle box positioning node", application number CN201711076518.3 and title "rigidity adjustment method of axle box positioning node of split sheath, and axle box positioning node", application number CN201711076519.8 and title "method and structure for changing rigidity of axle box positioning node through adjustment of rubber layer parameters", and application number CN201711076322.4 and title "method for enhancing fatigue reliability of axle box positioning node, and axle box positioning node" and utility models of application number CN201721460402.5 and title "axle box positioning node for enhancing fatigue reliability", application number CN201721460405.9 and title "axle box positioning node", application number CN201721460403.X and title "axle box positioning node of split sheath", application number CN201721460255.1 and title "axle box positioning node", and application number CN201721460565.3 and title "air-solid phase axle box positioning node", which have involved axle box positioning nodes. The above technologies are applicable to 380 series vehicles, and the rigidity at air-solid phases in the radial direction are quite different, and typically characterized anisotropic .
US 2007/085253 A1 discloses an elastomeric bush bearing and its manufacturing process. To reach a high ratio of static radial stiffness to torsion spring rate along with a high axial stiffness at the same time, a beading is formed at least at one axial end but preferably at both axial ends of the slotted bush. In case of an especially advantageous embodiment, a slotted bush with additional intermediate parts inserted into the elastomeric bearing body, two encapsulated rubber packets are created by the simultaneous special geometric design of the inner part. The individual stiffnesses of the two rubber packets are thus compensated and thus there is a homogeneous increase in the overall stiffness of the bush. The beadings are prepared before the components of the bearing are assembled and vulcanized to the parts of the later outer sleeve.
CN 207345831 U provides an axle box positioning node with improved fatigue reliability, including a spindle, a rubber layer, a split sleeve, and an overall sleeve, wherein the rubber layer sulfurized bonds in the outside of the spindle, and the split sleeve partially vulcanizing bonds onto the outside of the rubber layer and partially assembles on the outside of the rubber layer. The vulcanized parts between the rubber layer and the spindle as well as the split sleeve are stationary planes, whereas the assembled parts between the rubber layer and the split sleeve have free planes. The whole part formed by the spindle, the rubber layer and split sleeve is pressed into the whole sleeve.
WO 2017/031266 A1 discloses a bar pin bushing assembly for connecting components including a bar pin having at least one end with at least one bore to receive a fastener. The bar pin has a central portion having a diameter that is greater than a width or diameter of the at least one end of the bar pin. A compressible rubber section has a uniform thickness positioned around the central portion of the bar pin. The compressible rubber section further extends around downwardly tapering surfaces adjacent the central portion of the bar pin. A plurality of outer metal shells mold bond to the compressible rubber section, wherein when the bushing assembly is inserted into a hub, the plurality of outer metal shells are configured to radially compress the compressible rubber section to provide a precompressed bushing assembly. A method of assembling the bar pin bushing assembly is also disclosed.
EP 0 072 666 A1 discloses a bush having a rigid tubular inner sleeve, a tubular body of resilient elastomeric material extending around and secured to the inner sleeve and an outer shell secured to the outside of the body of elastomeric material. The bush fits into a housing in such a way that the body of elastomeric material is compressed, and hence, stress-relieved. The bush is located axially in position in the housing by means of a circumferential rib which engages a slot.

In addition, "Sun Haiyan, Huang Jiangbiao, Feng Wansheng, et al. Design of novel large radial-axial rigidity ratio motor suspension rubber rubber joint for high-speed EMU [J]. Locomotive electricity transmission. 2014(2):54-57" is a technical solution of a motor rubber joint with large radial-axial rigidity ratio designed previously by the applicant, and cannot satisfy the need of CR300 trains for small radial-axial rigidity ratio.

In addition, the patent for invention with application number CN201410138755.8 and title "large-curvature spherical multilayer split rubber metal joint" is also a split rubber joint proposed previously by the applicant.

The above solutions fail to involve motor rubber joints suitable for CR300 electric multiple units. Therefore, a product which can satisfy the novel train shall be designed.

### Summary

The present invention proposes an assembly method of a split motor rubber joint for railway vehicles and a motor rubber joint with respect to the current CR300 series standard electric multiple units, which satisfies the need of the vehicle for small radial-axial rigidity match property of the rubber joint which is convenient for quick assembly and forming.

The technical means adopted by the present invention to solve the above problems is: an assembly method of a split motor rubber joint adopts a mode of vulcanizing rubber layers between an I-shaped spindle with a mounting structure and a split sleeveand then pressing a vulcanized overall structure into an overall sleeve through interference fit to form a motor rubber joint with small radial-axial rigidity match property, and it can function as lateral stop for the motor during train operation by increasing the axial rigidity.

Further, the motor rubber joint has a radial-axial rigidity ratio of 30:10 (±20%).

Further, the outer free surfaces of the rubber layers are designed as non-concave free surfaces to simplify the designing and the manufacturing of the insert of its vulcanization mould of the product and to ensure the pressure required for vulcanization.

Further, the split sleeve is designed and cut into same three or more splits. Each split is vulcanized and bonded onto the concave surface on the outer side of the I-shaped spindle, and specific gaps are designed between every two splits of the sleeve.

Further, when the split sleeve is vulcanized and bonded onto the outer side of the spindle, corresponding specific gaps are designed between the rubber layers of two adjacent splits of split sleeve, so that the rubber releases the stress along the direction of the gap when the vulcanized overall structre is pressed into the overall sleeve, and the rubber of the vulcanized overall structure is attached to form a complete annular rubber layer, so that the split rubber joint has an isotropic characteristic in the radial direction.

Further, the parameters of the gaps between the splits sleeve and the rubber layers, diameter of the inner, diameter of the outer, and compression amount of the rubber layers are designed according to the loads and requirements of the vehicle.

A motor rubber joint comprises an I-shaped spindle with a mounting structure, rubber layers, a split sleeve and an overall sleeve. The split sleeve is vulcanized and bonded to the concave surface on the outer side of the I-shaped spindle through the rubber layers. The vulcanized overall structure of the spindle, the rubber layers and the split sleeve is pressed into the overall sleeve through interference fit.

Further, theouter free surfaces of the rubber layers are non-concave free surfaces.

Further, the split sleeve is designed and cut into same three or more splits. Each split is vulcanized and bonded onto the concave surface on the outer side of the I-shaped spindle, and specific gaps are designed between every two splits of sleeve.

Further, before press mounting processing, corresponding specific gaps are designed between the rubber layers vulcanized and bonded to two adjacent splits of split sleeve; and after press mounting processing, the split rubber layers are extruded and bonded to form a complete annular rubber layer.

The present invention has the following beneficial effects:
1. The present invention fully vulcanizes the split sleeve to the surface of the I-shaped spindle having mounting structure on both ends at one time only and then presses the split sleeve into the overall sleeve through interference fit, thereby simplify the assembly procedure and obviously increase production efficiency.
2. The present invention fully vulcanizes the split sleeve to the surface of the I-shaped spindle having mounting structure on both ends at one time only and then presses the split sleeve into the overall sleeve through interference fit, so that the split sleeve may not get loosened or move out during use, thereby enhancing product reliability.
3. The present invention fully vulcanizes the split sleeve to the surface of the I-shaped spindle and then presses the split sleeve into the overall sleeve through interference fit, thereby providing a stop function for the motor in the train operation while improving the axial rigidity, effectively limiting the relative displacement of the traction motor and bogie frame, eliminating the need for separate motor stop, and reducing the operation cost and the maintenance cost of the train.
4. The outer free surfaces of the rubber layers are designed as non-concave free surfaces of this invention, so that the insert of a vulcanizing mould can be designed as one whole part when the split sleeve is vulcanized to the outer side of the I-shaped spindle, thereby greatly simplifying the designing and the manufacturing of the insert and also is better for ensuring the pressure required for vulcanization.
5. The split sleeve is designed and cut into same three or more splits. Each split is vulcanized and bonded to the concave surface on the outer side of the I-shaped spindle, and specific gaps are designed between every two splits of sleeve and the corresponding rubber layers. After press mounting processing, the rubber layers are extruded and bonded to form a complete annular rubber layer, so that the product has an isotropic characteristic in the radial direction. There is no need to locate a specific direction when the product is mounted to the motor, thereby simplify the assembly requirements.

### Description of Drawings

Fig. 1 is an overall main schematic diagram after press mounting processing in an embodiment 1;
Fig. 2 is a sectional view before press mounting processing, wherein the spindle is not sectioned;
Fig. 3 is a schematic diagram of gaps between two adjacent splits of rubber layers and a split sleeve before press mounting processing; and
Fig. 4 is a schematic diagram of gaps fit between two adjacent splits of rubber layers and the split sleeve after press mounting processing.
In the figures: 1 spindle; 2 rubber layers; 3 split sleeve; 4 overall sleeve; and 5 gaps.

### Detailed Description

The present invention will be further described below in combination with the drawings.

The present invention is often used for motor suspension systems and can also be used for other flexible connection purposes. Unlike the conventional air and solid motor rubber joints which aim to reduce the rigidity of an air direction, the split structure can meet the rigidity requirement and simultaneously improve the convenience of assembly of the product itself and the assembly of the product and its matching components of the system, thereby enhancing the reliability of the split rubber joint. Tests made by the applicant show that when the split sleeve are designed and cut into two splits or non-uniform splits, the ovalization of the rubber joint after assembled or used for a short period of time will be very serious. This will affect the use of the product and will cause varying degrees of damage to the matching components during replacement.

### Embodiment 1

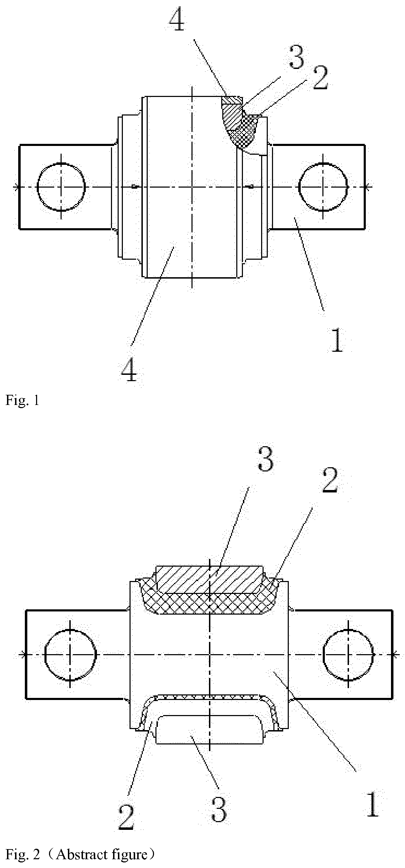

The present embodiment is an optimal embodiment. As shown in Fig. 1, a motor rubber joint comprises an I-shaped spindle 1 with mounting structure on both ends, rubber layers 2, a split sleeve 3 and an overall sleeve 4. The split sleeve 3 is vulcanized and bonded to the concave surface on the outer side of the I-shaped spindle 1 through the rubber layers 2. The vulcanized overall structure of the spindle 1, the rubber layers 2 and the split sleeve 3 is pressed into the overall sleeve 4 through interference fit. The split sleeve 3 is directly vulcanized and bonded to the concave surface on the outer side of the I-shaped spindle 1 through the rubber layers 2, and then the vulcanized overall structure is pressed into the overall sleeve 4 through interference fit, thereby simplify the assembly procedure and increase production efficiency. The split sleeve and the rubber body are completely vulcanized as one whole part, thereby enhance product reliability.

As shown in Fig. 1 to Fig. 2, outer free surfaces of the rubber layers 2 are designed as non-concave free surfaces. Generally, the end surfaces of the rubber layer having connecting surfaces on both sides are designed as concave curved surfaces so that the rubber releases the stress toward the concave surface after being extruded. However, the design of the free surface of this structure also leads to that the insert of the vulcanizing mould matched with the concave curved surface of the rubber during vulcanization needs to be divided into a plurality of inserts, thereby increasing the difficulty of the designing and manufacturing of the mould. The plurality of inserts which are divided simultaneously are not conducive to the establishment of vulcanization pressure, and additional designing and manufacturing details shall also be concerned to ensure the pressure required to vulcanize the rubber. The design of the non-concave free surface in the present embodiment ensures that the product is made into as one whole part with the insert matched with the end surface of the rubber layer 2 during vulcanization molding, thereby simplify the designing and the manufacturing of the vulcanizing mould and also ensure the pressure required for vulcanization more easily. Moreover, the joint of the rubber layer 2 with both sides is designed as a smooth rubber-clad structure, so that the rubber layer 2 may not peel off from the connecting surface after being extruded, and the stress can be released from the free surface.

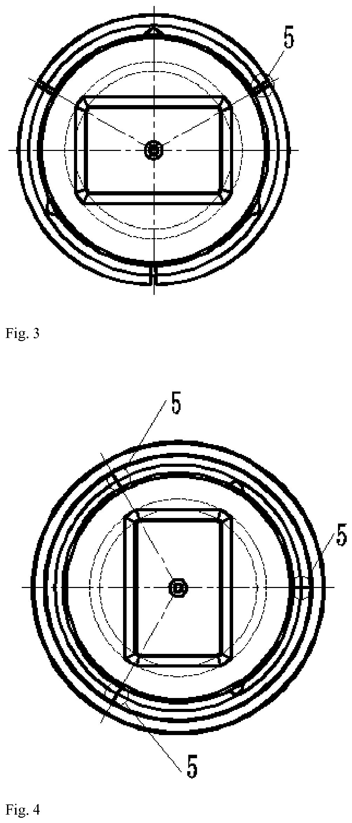

As shown in Fig. 3 to Fig. 4, the split sleeve 3 are designed and cut into same three splits. Each split is vulcanized and bonded to the concave surface on the outer side of the I-shaped spindle 1, and a specific gap 5 is designed between every two splits. The split sleeve 3 is divided into the same three splits, so it is easy to achieve the performance needs for the rubber joint, and effectively reduce the elliptic phenomenon. The designing and manufacturing difficulty of the split shells are relatively low. The gaps reserved between the split sleeve 3 ensures that the split sleeve 3 may not impede compression of the rubber layers 2 after being extruded when the vulcanized overall structure is pressed into the overall sleeve 4 through interference fit.

Before press mounting processing, specific gaps 5 is designed between the inner parts of the rubber layers 2 and vulcanized and bonded to two adjacent splits of split sleeve 3; and after press mounting processing, the rubber layers 2 is extruded and bonded to form a complete annular rubber layer 2. During vulcanization, the rubber layers 2 between the adjacent split sleeve 3 is also designed as free surfaces with the gaps 5 to ensure that the extruded rubber can release the stress towards the free surface when the vulcanized overall structure is extruded into the overall sleeve 4, and the free surfaces on both sides of the gaps of the formed motor rubber joint are attached to form a complete ring. The product has isotropic characteristics in the radial direction. There is no need to locate a specific direction when the product is mounted to the motor, thereby simplify the assembly requirements and reduce operation and maintenance cost.

### Embodiment 2

In the present embodiment, the split sleeve 4 can be divided into four or more splits, but the design mode of the split sleeve will increase the difficulty of designing and manufacturing, and increase the workload of molding, inspection etc..

### Embodiment 3

In the present embodiment, outer free surfaces of the rubber layers 2 are designed as concave curved surface in accordance with the conventional mode. However, this design will increase the difficulties of manufacturing of the product, as well as the designing and processing its vulcanizing mould. Therefore, this embodiment does not fall within the scope of the present invention.

It is observed through the above embodiment that the present invention also relates to an assembly method of a split motor rubber joint, which adopts a mode of vulcanizing a rubber layers 2 between an I-shaped spindle 1 with mounting structure on both ends and a split sleeve 3 and then pressing a vulcanized overall structure into an overall sleeve 4 through interference fit to ensure that the motor rubber joint has a radial-axial rigidity ratio of 30:10 (±20%) and form a structure with small radial-axial rigidity match property, and it can function as lateral stop for the motor during train operation by increasing the axial rigidity. After the motor rubber joint is used to suspend the motor to a vehicle bogie, the rigidity shall be adequate to ensure that the motor can be suspended stably, and also shall not be too large so as to ensure that the vibration of the motor may not be completely transmitted to the bogie frame. The motor rubber joint provides vibration reduction for the motor to prolong the service life of the motor. A stop function is provided for the motor by improving the axial rigidity of the motor rubber joint, so as to ensure that the motor may not excessively move or even move out during operation of the vehicle.

The outer free surface where the rubber layers 2 are designed as non-concave free surfaces to simplify the designing and the manufacturing of the mold insert of the product and to ensure the pressure required for vulcanization. The insert matched with the outer free surface of the rubber layers 2 on the vulcanizing mould can be designed as one whole part when the split sleeve 3 is vulcanized to the outer side of the spindle 1, thereby simplify the designing and the manufacturing of the vulcanizing mould and also ensure the pressure required for vulcanization more easily.

The split sleeve 3 is designed and cut into same three or more splits. Each split is vulcanized and bonded to the concave surface on the outer side of the I-shaped spindle 1, and specific gaps are designed between every two splits.

When the split sleeve 3 is vulcanized and bonded to the outer side of the spindle 1, corresponding gaps are also designed between the inner parts of the rubber layers 2 which are vulcanized and bonded to two adjacent splits of split sleeeve 3, so that the rubber releases the stress towards the gap when the vulcanized overall structure is pressed into the overall sleeve 4, and the vulcanized overall structure is attached to form a complete annular rubber layer 2.

The parameters of the gaps between the split sleeve 3 and the rubber layers 2, the diameter of the inner, the diameter of the outer, and the compression amount of the rubber layers 2 are designed according to the loads and requirements of the vehicle. When the load is large, the rigidity of the motor rubber joint is required to be large, and the compression amount of the rubber layer 2 needs to be increased at this time, which can be realized by increasing the outer diameter and/or the inner diameter of the split sleeve 3 in the case where the overall sleeve 4 is unchanged. Therefore, the gap between the split sleeve 3 and the rubber layers 2 also needs to be increased to ensure that the vulcanized overall structure can be smoothly pressed into the overall sleeve 4.

The above embodiments are merely used for illustration of the present invention, and are not intended to limit the present invention. Various changes or transformations can also be made by those skilled in the art.
Therefore, all equivalent technical solutions shall also belong to the protection scope of the present invention, and the protection scope of the present invention shall be defined by the appended claims.

## Claims

1. An assembly method of a split motor rubber joint, wherein it adopts a mode of vulcanizing rubber layers (2) between an I-shaped spindle (1) with a mounting structure and a split sleeve (3) and then pressing a vulcanized overall structure into an overall sleeve (4) through interference fit to form a motor rubber joint with a small radial-axial rigidity match property, wherein the motor rubber joint has a radial-axial rigidity ratio of 30:10 (±20%) , and it can function as a lateral stop for the motor during train operation by increasing its axial rigidity, **characterized in that** the outer free surfaces of the rubber layers (2) are designed as non-concave free surfaces to simplify the designing and manufacturing of its insert of the vulcanization mould of the product and to ensure the pressure required for vulcanization processing; and
the split sleeve (3) is designed and cut into same three or more splits; each split is vulcanized and bonded onto the concave surface of the outer side of the I-shaped spindle (1), and specific gaps are designed between every two splits of sleeve, wherein, when the split sleeve (3) is vulcanized and bonded onto the outer side of the spindle (1), a corresponding specific gap is designed between the rubber layers (2) of two adjacent splits of the split sleeve (3), so that the rubber releases the stress along the direction of the gap when the vulcanized overall structure is pressed into the overall sleeve (4), and the vulcanized rubber layers are attached to form one complete annular rubber layer, so that the split rubber joint has isotropic characteristics in the radial direction.

2. The assembly method of a split motor rubber joint according to claim 1, **characterized in that**: the parameters of the gap between the splits and the gap between the rubber layers (2),the diameter of the inner, the diameter of the outer, and compression value of the rubber layers (2) are designed according to the loads and requirements of a vehicle, wherein when the load is large, the rigidity of the motor rubber joint is required to be large, and the compression amount of the rubber layer (2) needs to be increased at this time, which can be realized by increasing the outer diameter and/or the inner diameter of the split sleeve (3) in the case where the overall sleeve (4) is unchanged, and therefore, the gap between the split sleeve (3) and the rubber layers (2) also needs to be increased to ensure that the vulcanized overall structure can be smoothly pressed into the overall sleeve (4).

3. A motor rubber joint comprises an I-shaped spindle (1) with a mounting structure, rubber layers (2), a split sleeve (3) and an overall sleeve (4), wherein the split sleeve (3) is vulcanized and bonded onto the concave surface on the outer side of the I-shaped spindle (1) through the rubber layers (2); the vulcanized overall structure of the spindle (1), the rubber layers (2) and the split sleeve (3) is pressed into the overall sleeve (4) through interference fit, **characterized in that** the outer free surfaces of the rubber layers (2) are designed to be non-concave free surfaces; and
the split sleeve (3) is designed and cut into the same three or more splits; each split is vulcanized and bonded onto the concave surface on the outer side of the I-shaped spindle (1), and a gap is designed between every two splits of sleeve, wherein, before press mounting processing, gaps are designed between the inner parts of the rubber layers (2) vulcanized and bonded to two adjacent splits of split sleeve (3); and after press mounting processing, the split rubber layers (2) are extruded and bonded to be a complete annular rubber layer.

## Patentansprüche

1. Verfahren zum Zusammenbau einer geteilten Motor-Gummi-Verbindung, bei dem ein Modus zum Vulkanisieren von Gummischichten (2) zwischen einer I-förmigen Spindel (1) mit einer Montagestruktur und einer geteilten Hülse (3) angewendet wird und zum anschließenden Pressen einer vulkanisierten Gesamtstruktur in eine Gesamthülse (4) durch Presspassung angewendet wird, um eine Motor-Gummi-Verbindung mit einer kleinen Radial-Axial-Steifigkeitsanpassungseigenschaft zu bilden, wobei die Motor-Gummi-Verbindung ein Radial-Axial-Steifigkeitsverhältnis von 30:10 (±20%) aufweist und durch Erhöhung ihrer axialen Steifigkeit als seitlicher Anschlag für den Motor während des Zugbetriebs fungieren kann, **dadurch gekennzeichnet, dass** die äußeren freien Oberflächen der Gummischichten (2) als nicht-konkave freie Oberflächen ausgebildet sind, um die Konstruktion und Herstellung ihres Einsatzes der Vulkanisationsform des Produkts zu vereinfachen und den für die Vulkanisationsverarbeitung erforderlichen Druck sicherzustellen; und
die geteilte Hülse (3) in gleiche drei oder mehr Teile gestaltet und geschnitten ist; jede Teil vulkanisiert und an die konkave Oberfläche der Außenseite der I-förmigen Spindel (1) gebunden wird, und zwischen jeweils zwei Teilen der Hülse spezifische Spalte vorgesehen werden, wobei, wenn die geteilte Hülse (3) vulkanisiert und an die Außenseite der Spindel (1) gebunden wird, eine zugeordneter spezifischer Spalt zwischen den Gummischichten (2) von zwei benachbarten Teilen der geteilten Hülse (3) ausgebildet wird, so dass das Gummi die Spannung entlang der Richtung des Spaltes abbaut, wenn die vulkanisierte Gesamtstruktur in die Gesamthülse (4) gepresst wird, und die vulkanisierten Gummischichten zu einer vollständigen ringförmigen Gummischicht verbunden werden, so dass die geteilte Gummiverbindung isotrope Eigenschaften in radialer Richtung aufweist.

2. Verfahren zum Zusammenbau einer geteilten Motor-Gummi-Verbindung nach Anspruch 1, **dadurch gekennzeichnet, dass**: die Parameter des Spalts zwischen den Teilen und der Spalt zwischen den Gummischichten (2), der Durchmesser der inneren, der Durchmesser der äußeren und der Kompressionswert der Gummischichten (2) entsprechend den Belastungen und Anforderungen eines Fahrzeugs ausgelegt werden, wobei bei einer großen Belastung die Steifigkeit der Motor-Gummi-Verbindung groß sein muss und der Kompressionswert der Gummischicht (2) zu diesem Zeitpunkt erhöht werden muss, was durch eine Vergrößerung des Außendurchmessers und/oder des Innendurchmessers der geteilten Hülse (3) erreicht werden kann, wenn die Gesamthülse (4) unverändert bleibt, und daher auch der Spalt zwischen der geteilten Hülse (3) und den Gummischichten (2) vergrößert werden muss, um sicherzustellen, dass die vulkanisierte Gesamtstruktur leicht in die Gesamtmuffe (4) gepresst werden kann.

3. Eine Motor-Gummi-Verbindung weist eine I-förmige Spindel (1) mit einer Montagestruktur, Gummischichten (2), eine geteilte Hülse (3) und eine Gesamthülse (4) auf, wobei die geteilte Hülse (3) durch die Gummischichten (2) auf die konkave Oberfläche auf der Außenseite der I-förmigen Spindel (1) vulkanisiert und mit dieser verbunden ist; die vulkanisierte Gesamtstruktur aus der Spindel (1), den Gummischichten (2) und der geteilten Hülse (3) durch Presspassen in die Gesamthülse (4) gepresst ist, **dadurch gekennzeichnet, dass** die äußeren freien Oberflächen der Gummischichten (2) als nicht-konkave freie Oberflächen ausgebildet sind; und
die geteilte Hülse (3) in gleiche drei oder mehr Teile geschnitten ist; jeder Teil vulkanisiert und mit der konkaven Oberfläche auf der Außenseite der I-förmigen Spindel (1) verbunden ist und ein Spalt zwischen jeweils zwei Teilen der Hülse vorgesehen ist, wobei vor der Pressmontage Lücken zwischen den inneren Teilen der Gummischichten (2) vorgesehen sind, die mit zwei benachbarten Teilen der geteilten Hülse (3) vulkanisiert und verbunden sind; und nach der Pressmontage die geteilten Gummischichten (2) extrudiert und zu einer vollständigen ringförmigen Gummischicht verbunden sind.

## Revendications

1. Procédé d'assemblage d'un joint en caoutchouc fendu pour moteur, dans lequel on adopte un mode de vulcanisation des couches de caoutchouc (2) entre une broche en forme de I (1) avec une structure de montage et un manchon fendu (3), puis on presse une structure globale vulcanisée dans un manchon global (4) par ajustement serré pour former un joint en caoutchouc pour moteur avec une petite propriété de correspondance de rigidité radiale-axiale, dans lequel le joint en caoutchouc pour moteur a un rapport de rigidité radiale-axiale de 30 :10 (±20%), et il peut fonctionner comme un arrêt latéral pour le moteur pendant le fonctionnement du train en augmentant sa rigidité axiale, **caractérisé en ce que** les surfaces libres extérieures des couches de caoutchouc (2) sont conçues comme des surfaces libres non concaves pour simplifier la conception et la fabrication de son insertion dans le moule de vulcanisation du produit et pour assurer la pression requise pour le traitement de vulcanisation ; et
le manchon fendu (3) est conçu et découpé en trois fentes ou plus ; chaque fente est vulcanisée et collée sur la surface concave du côté extérieur de la broche en forme de I (1), et des espaces spécifiques sont conçus entre toutes les deux fentes du manchon, dans lequel, lorsque le manchon fendu (3) est vulcanisé et collé sur le côté extérieur de la broche (1), un espace spécifique correspondant est conçu entre les couches de caoutchouc (2) de deux fentes adjacentes du manchon fendu (3), de sorte que le caoutchouc libère la contrainte le long de la direction de l'espace lorsque la structure globale vulcanisée est pressée dans le manchon global (4), et les couches de caoutchouc vulcanisées sont attachées pour former une couche de caoutchouc annulaire complète, de sorte que le joint en caoutchouc fendu a des caractéristiques isotropes dans la direction radiale.

2. Procédé d'assemblage d'un joint de caoutchouc moteur fendu selon la revendication 1, **caractérisé en ce que** : les paramètres de l'espace entre les fentes et l'espace entre les couches de caoutchouc (2), le diamètre intérieur, le diamètre extérieur et la valeur de compression des couches de caoutchouc (2) sont conçus en fonction des charges et des exigences d'un véhicule, où lorsque la charge est importante, la rigidité du joint de caoutchouc moteur doit être importante, et la valeur de compression de la couche de caoutchouc (2) doit être augmentée à ce moment-là, ce qui peut être réalisé en augmentant le diamètre extérieur et/ou le diamètre intérieur du manchon fendu (3) dans le cas où le manchon global (4) reste inchangé, et par conséquent, l'espace entre le manchon fendu (3) et les couches de caoutchouc (2) doit également être augmenté pour garantir que la structure globale vulcanisée peut être pressée en douceur dans le manchon global (4).

3. Un joint en caoutchouc pour moteur comprend une broche en forme de I (1) avec une structure de montage, des couches de caoutchouc (2), un manchon fendu (3) et un manchon global (4), dans lequel le manchon fendu (3) est vulcanisé et collé sur la surface concave du côté extérieur de la broche en forme de I (1) par l'intermédiaire des couches de caoutchouc (2) ; la structure globale vulcanisée de la broche (1), les couches de caoutchouc (2) et le manchon fendu (3) sont pressés dans le manchon global (4) par ajustement serré, **caractérisé en ce que** les surfaces libres extérieures des couches de caoutchouc (2) sont conçues pour être des surfaces libres non concaves ; et le manchon fendu (3) est conçu et découpé en trois fentes ou plus ; chaque fente est vulcanisée et collée sur la surface concave du côté extérieur de la broche en forme de I (1), et un espace est conçu entre toutes les deux fentes du manchon, dans lequel, avant le traitement de montage sous presse, des espaces sont conçus entre les parties internes des couches de caoutchouc (2) vulcanisées et collées à deux fentes adjacentes du manchon fendu (3) ; et après le traitement de montage sous presse, les couches de caoutchouc fendues (2) sont extrudées et collées pour former une couche de caoutchouc annulaire complète.
